# EUROPEAN PATENT SPECIFICATION

(11) **EP 1 082 024 B1**
(45) Date of publication and mention of the grant of the patent: **16.03.2005**
(21) Application number: 98926117.7
(22) Date of filing: 29.05.1998
(51) Int. Cl.: A23G 3/30

(54) **APPARATUS FOR SIZING CHEWING GUM MATERIAL**
VORRICHTUNG ZUM KALIBRIEREN VON KAUGUMMI
MACHINE POUR LE CALIBRAGE DE CHEWING GUM

(43) Date of publication of application: 14.03.2001
(60) Divisional application: 02019887.5
(73) Proprietor: Cadbury Adams USA LLC, Wilmington, DE 19808, (US)
(72) Inventor: HOFFMAN, Earl, Roger, Machesney Park, IL 61115 (US); FRIBERG, Anita, Roscoe, IL 61073 (US); DEGADY, Marc, Morris Plains, NJ 07950 (US)
(74) Representative: Goodwin, Mark
(86) International application number: PCT/US1998/010920
(87) International publication number: WO 1999/062352

(56) References cited:
- EP-A- 0 273 809
- EP-A- 0 524 902
- WO-A-93/17579
- US-A- 2 215 575
- US-A- 3 857 963
- US-A- 4 555 407
- US-A- 4 850 842
- US-A- 4 882 175

## Description

### Technical Field

The present invention relates to an apparatus for sizing a continuous strip of chewing gum material comprising at least one pair of roller members.

### Background Of The Invention

The process of making and packaging of slab/stick-type gum products is time-consuming and involves significant manual handling. The main problem has been in maintaining the size of the slab during automated processing. Stab/stick-type gums, such as Trident® gum produced by Warner Lambert, are typically processed in batch kettles, divided into chunks by hand, formed into a wide, flat continuous sheet by an extruder machine, and then passed through rolling, scoring, and cutting machines. The sheets of scored gum are maintained in cooled conditioning rooms before they are wrapped and packaged. The sheets of gum product are taken to a packaging machine where they are first divided into elongated strips and then into individual pieces of gum and subsequently wrapped and packaged.

Some chunk-style gum products, such as bubble gum products, are formed into a rope-like configuration and fed directly from an extruder into a packaging machine. The product is roll formed into a generally square cross-sectional configuration and divided into individual pieces by a cutting mechanism. The individual pieces are then wrapped and packaged. One process which forms ropes of gum is shown, for example, in U.S. Patent No. 4,940,594.

EP 0,334,648 also refers to apparatus for handling chewing gum having a circular cross-section wherein the gum is conveyed along a series of belts in order that the gum can cool sufficiently reaching a cutting implement.

US 4,555,407 and US 2,215,575 disclose an apparatus according to the preamble of claim 1.

Heretobefore, it has not been possible to utilize a continuous processing and packaging system for slab/stick-type chewing gum products packaged on standard slab gum wrappers. This is due to the fact that standard packaging machines require precisely sized and conditioned gum pieces for wrapping.

### Summary Of The Invention

It is an object of the present invention to provide an improved apparatus which sizes and maintains a final chewing gum product in a flat tape-like configuration so that it can be fed directly to a standard packaging machine.

The gum product is preferably produced by a continuous extrusion process. The resultant molten gum product is formed into a continuous tape or ribbon of material by a second extrusion apparatus. The strand of gum material is passed through a cooling apparatus and into a final sizing mechanism. The sizing apparatus maintains the material in a precisely dimensioned size and shape configuration. The sizing apparatus includes a plurality of parallel and perpendicular rollers that form the continuously fed gum material to a final size and finish of high dimensional tolerances. The resultant material exiting from the sizing apparatus has the final specified cross-sectional size and shape.

Thereafter, the cooled and precisely formed continuous strip of material is fed into a cutting and packaging machine where the gum product is divided into individual pieces of gum product and individually wrapped. The wrapped individual pieces of gum product are formed into packs by the packaging machine, and the packs of gum material are subsequently assembled together in sets for commercial sale.

The present invention achieves some or all of the following advantages over present systems for producing and packaging slab/stick-type chewing gum products: faster cycle time, less work in progress, ability to process and package multiple flavours at the same time, improved process control, reduced labor expense, reduction of labor intensive repetitive operations, reduced material handling, and less complexity.

These and other aspects and features of the present invention will become apparent from the following description of the invention, when viewed in accordance with the accompanying drawings and appended claims.

### Brief Description Of The Drawings

FIGURE 1 is a schematic diagram of the preferred embodiment of the present invention, while FIGURE 1 A shows an alternate embodiment for a portion thereof;
FIGURE 2 is a side view of a chewing gum sizing apparatus in accordance with the present invention shown;
FIGURE 3 is a top elevational view of the sizing apparatus shown in Figure 2;
FIGURE 4 is a schematic view illustrating a portion of the sizing apparatus shown in Figures 2 and 3; and
FIGURE 5 is a cross-sectional view of the apparatus shown in Figure 4, with the cross-sections being taken along line 7-7 in Figure 4 and in the direction of the arrows.

### Best Mode(s) For Carrying Out The Invention

The present invention is an improvement over known apparatus for producing slab/stick-type final chewing gum products in a standard wrapper. These chewing gum products typically comprise small flat pieces of chewing gum on the order of 3.2 cm (1-1/4 inches) in length, 1.0 cm (3/8 inches) in width, and 0.4 cm (1/6 inches) in thickness. Commercial products of this type include the Trident® and Dentyne® products marketed by Warner Lambert Company.

Known apparatuses for producing gum bases are shown, for example, in U.S. Patent Nos. 4,187,320, 5,397,580 and 5,419,919. The chewing gum base is mixed with the various ingredients of the final chewing gum product, such as flavouring agents, sweeteners, fillers, coloring agents, softeners, and the like, and processed into the final product.

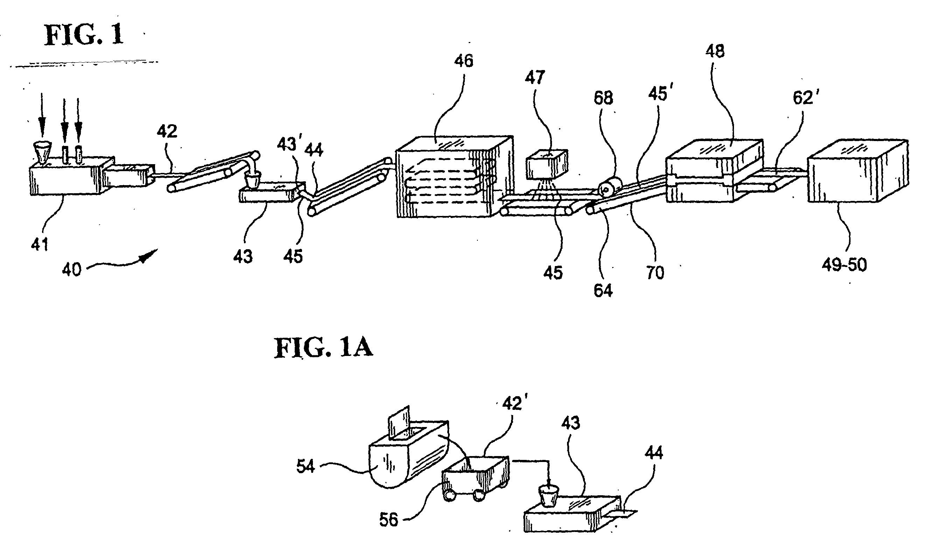

Figure 1 schematically illustrates the preferred equipment and apparatus used with the inventive process. Figure 1A shows an alternative process where a batch-type process is used to make the final chewing gum product.

As shown in Figure 1, the final gum base ingredients, such as the gum base, flavouring agents, sweeteners, fillers, coloring agents, softeners, and the like, are added to a continuous extruder apparatus 41. The final gum product 42 is fed into a second extruding apparatus 43 which produces an elongated tape or ribbon 44 of material. The gum product 42 can be fed directly into the extruder 43, as shown, or extruded into a cart or the like and then dumped or otherwise introduced into the extruder 43. The downstream end of the extruder 43 has an extrusion die 43' which causes the material to be extruded in the desired shape At this point, the tape 44 is continuous and has a cross-section preferably about 3.2 cm (1-1/4 inches) in width and 0.42 cm (1/6 inches) (0.0167 inches) in height.

The tape 44 exiting from extruder 43 is at an elevated temperature (about 37.8°C (100°F)) and needs to be cooled approximately to room temperature (about 21°C-24°C (70-75°F)) for further processing. Thus, the tape of material 44 is passed through a cooling chamber or tunnel 46. The cooling chamber can be of any conventional type, but preferably is a 9-Pass Dx unit from Greer. Upon exiting the cooling chamber 46, the tape of material is lightly dusted with a powder by sprinkler apparatus 47. The continuous material 45 is then passed through the sizing apparatus 48 and conveyed directly to a standard or conventional packaging machine 49-50. In the packaging machine, the material is cut into individual pieces by a rotating cutter (not shown) and then the separate pieces are wrapped individually.

In an alternative procedure, the continuous type of material 45 exiting from the cooling chamber 46 or from the sizing apparatus 48 can be cut into 44 cm (17-1/4 inch) lengths. For this purpose, a rotary cutting apparatus (not shown) can be positioned downstream of either the chamber 46 or sizing apparatus 48. Some conventional packaging machines need a fixed length of a strip of gum product for further processing.

As indicated above, the present invention can be used with a final chewing gum material which has been made by a continuous extrusion process (as shown in Figure 1), or which has been produced by a batch-type process. The latter is shown in Figure 1A. The chewing gum product 42' is made in a batch kettle 54 and dumped into a cart 56 or similar conveyance apparatus. The material is then deposited into an extrusion machine, such as extruder 43, where it is extruded as a tape or ribbon 44 of a prespecified size and shape. The remainder of the bath-type process is the same as that shown above with reference to Figure 1.

Although it is noted above that the gum base material is added to the continuous extruder 41 or bath-kettle 54 along with the other ingredients of the final gum material, it is also possible to use a continuous extrusion processor and prepare the final gum material in one continuous process. This is shown, for example, in U.S. Patent Nos. 5,045,325 and 5,135,760. Also, if the gum base is produced separately, it can be produced by any known or conventional process, such as with a continuous extruder or a batch-type apparatus. Production of gum bases with these procedures are shown, for example, in U.S. Patent Nos. 4,187,320, 5,397,580 and 5,419,919.

The apparatus of the present invention substantially simplifies the gum processing and packaging process, the invention gives rise to a significantly more efficient and much less labour-intensive process than prior art processes.

The apparatus of the present invention not only gives rise to a more efficient process than prior art processes, but improves the final gum quality and shelf life. The quality of the final gum product is improved because it is not subject to age effects or risks of contamination known in prior art processes. Potential for product mix up or cross-contamination with other flavours of chewing gum products in the conditioning room are eliminated. Also, plant spaced devoted to the production and inventory of slab-type chewing gum products will be reduced.

Further benefits and advantages of the apparatus of the present invention include: faster cycle times, minimization or elimination of work in progress, ability to process multiple flavours of gum products at the same time, improved process control, reduced material handling and less complexity.

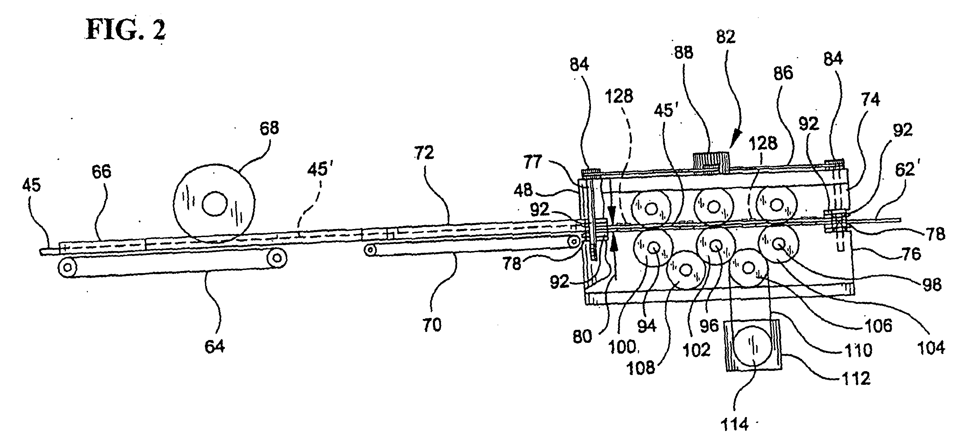

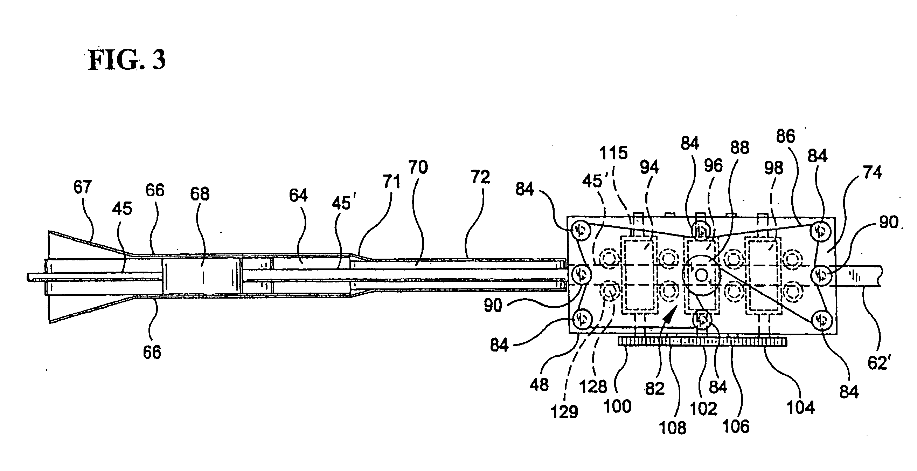

A preferred sizing apparatus used to perfect the final slab-type chewing gum product in its final form before packaging is shown in Figures 2-5. The apparatus is generally referred to by the numeral 48. As shown in Figures 2 and 3, the tape or ribbon 45 of final chewing gum product is positioned on a first conveyor belt apparatus 64. The top of the conveyor belt is flanked by side rails 66 which help keep the material in line. A first roller 68 is positioned over the conveyor belt 64 and used to firmly retain the tape of final gum material 45'. A second conveyor belt apparatus 70 is used to transport the material into the sizing apparatus 48. A second set of side rails 72 are used to assist in keeping the flat strip of material on the conveyor belt 70.

Preferably, angled or flared lead-in sections 67 and 71 are used in. combination with side rails 66 and 72, respectively. The sizing apparatus 48 is preferably made of a food grade metal, such as stainless steel, and has an upper member 74 and a lower member 76. The two members 74 and 76 are positioned one on top of the other as shown in Figure2 and are guided and held in place by a plurality of elongated guide pins 77 (one shown in Figure 2) and a plurality of coil biasing springs 78. the pins 77 keep the two halves 74 and 76 in alignment. The springs 78 are used to assist in positioning the upper and lower halves 74 and 76 evenly relative to one another so that the space 80 between them has a constant dimension.

The two halves 74 and 76 are primarily maintained an equal distance apart by a uniform leveling mechanism 82. That mechanism includes a series of threaded pins 84 positioned in the four corners of the apparatus 48 and along the two sides. A continuous chain 86 operated by an adjustment wheel 88 is used to simultaneously turn and adjust all of the threaded pins 84. A pair of tension wheels 90 are also used as part of the leveling mechanism 82 in order to maintain the chain 86 in tension.

The coil springs 78 are positioned in cut-out sections 92 which are provided along. both ends of the apparatus 48. The springs 78 maintain a constant tension between the upper and lower halves 74 and 76 and act in cooperation with the levelling mechanism 82 in order to maintain the accuracy of the width of the space 80.

Three sets of parallel rollers, 94, 96 and 98 are used to roll and regulate the thickness of the strip of material 45' inside the apparatus 48. The sets of rollers 94, 96 and 98 are driven by gear members 100, 102, and 104, respectively, which, in turn, are driven by primary drive gear 106 and a secondary drive gear 108. In this regard, drive gear 106 is driven by chain 110 connected to motor 112. The motor 112 drives gear 114 which, in turn, through chain 110, drives gear 106. Gear 106, in turn, drives gears 102 and 104 and thus drives sets of rollers 96 and 98. Gear 102 also drives gear 108 which, in turn, drives gear 100 and roller set 94.

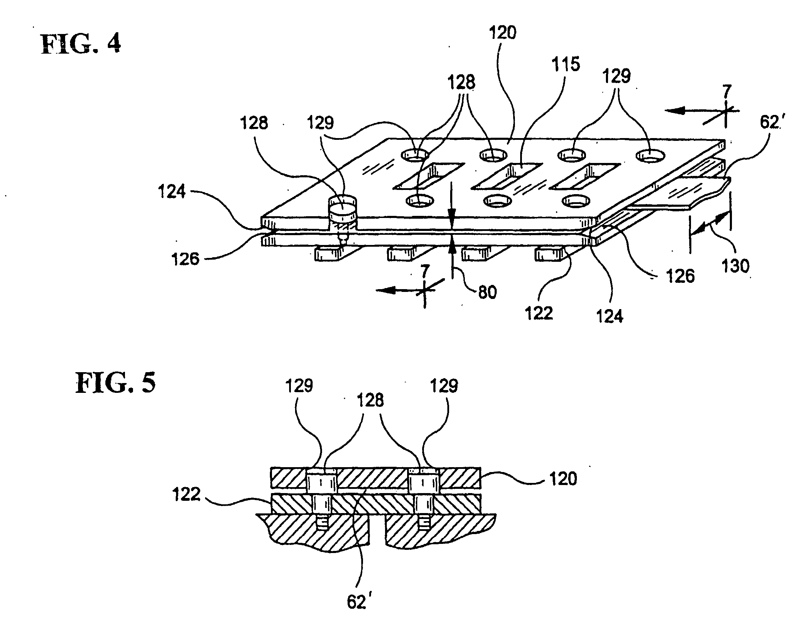

Upper member 74 of apparatus 48 has a metal plate 120 connected to it which is positioned in axial alignment with the strip of material 45 (see Figure 4). Similarly, lower member 76 of apparatus 48 has a corresponding elongated metal plate 122 connected to it. The plates 120 and 122 are opposed to each other and used to define the space 80 in which the chewing gum product 62 is passed through. The plates 120, 122 have openings 115 in them for positioning of the rollers 92, 94 and 96. For ease of entrance and exit of the chewing gum material 45' into and out of the space 80, the front and rear edges of the plate 120 and 122 are angled or chamfered, such as shown by numerals 124 and 126, respectively, in Figure 4.

A plurality of sets of vertically arranged roller-guide members 128 are positioned in openings 129 in the flat plates 120 and 122. In this regard, for ease of understanding, the drawings only show one roller 128 in Figure 4 and two rollers 128 in Figure 5; however, the rollers are positioned in pairs and preferably four sets of rollers are positioned on the sides of the gum material in space 80. The roller members are preferably made from a metal material, such as stainless steel. The roller/guide members 128 define the precise width 130 of the final chewing gum product 62'.

Thereafter, the continuous strip of final chewing gum product 45', which has its final cross-sectional size, shape, and finish is passed into a standard stab/stick-type gum wrapping machine 49-50. The strip or tapes of material 62' are divided by a rotary cutter into individual pieces and wrapped. Once the individual pieces are wrapped, they are assembled in sets or packs. Thereafter, the final packages of gum are subjected to conventional handling and further processing.

While the best modes for carrying out the invention have been described in detail, those familiar with the art to which this invention relates will recognize various alternative designs and embodiments for practicing the invention as defined by the following claims.

## Claims

1. An apparatus (48) for sizing a continuous strip of chewing gum material comprising at least one pair of roller members (128) **characterised in that** the apparatus comprises:
a housing having an upper member (74) and a lower member (76) forming an elongated flat passageway (80);
said passageway (80) having a predetermined size and shape corresponding to the size and shape of the final chewing gum product.

2. The apparatus of claim 1 wherein said upper member (74) has a first plate member (120) forming a first portion of said passageway (80) and said lower member (76) has a second plate member (122) forming a second portion of said passageway (80).

3. The apparatus of claim 2 further comprising means for positioning said first (120) and second plate members (122) substantially parallel to each other.

4. The apparatus of claim 1 further comprising biasing means (78) for biasing said upper (74) and lower members (76) are relative to one another.

5. The apparatus of claim 1 wherein at least two pairs of roller members (94 and 128) are provided.

6. The apparatus of claim 5 wherein one of said sets of roller member (128) is positioned vertically and the other of said sets of roller member (94) is positioned horizontally.

7. The apparatus of claim 1 further comprising at least two pairs of roller members (128) in said housing for keeping said continuous strip of material at said predetermined size and shape in said passageway.

8. The apparatus of claim 7 wherein three pairs of roller members (128) are provided in said housing.

9. The apparatus of claim 2 wherein said plates (120 and 122) have. an opening (129) in them for positioning of the rollers (128).

10. The apparatus of any of claims 2 to 9 having metal plates positioned in axial alignment with the strip.

11. The apparatus of any of claims 2 to 10 wherein said plates (120 and 122) are chamfered or angled (124 and 126), for ease of entrance and exit of the chewing gum material.

12. The apparatus of any of claims 1 to 11 having three sets of parallel rollers (94, 96 and 98) rolling and regulating the thickness of the strip of material.

13. The apparatus of any of claims 2 to 12 having a plurality of sets of vertically arranged roller/guide members (128) positioned in opening in said plates.

14. The apparatus of claim 13 wherein said roller members (128) are positioned on the sides of the gum material (45') and define the precise width of the final chewing gum product.

15. The apparatus of any of claims 1 to 14 comprising a levelling mechanism (82) for maintaining an equal distance apart of said upper (74) and lower members (76).

16. The apparatus of claim 15 wherein said levelling mechanism (82) includes a pair of tension wheels (90) and a series of threaded pins (84) positioned in the four corners of the apparatus (48) and along the two sides, a continuous chain (86) operating by an adjustment wheel (88) for simultaneously turning and adjusting of the threaded pins (84) and a pair of tension wheels (90).

## Patentansprüche

1. Gerät (48), um einen ununterbrochenen Streifen aus Kaugummimaterial auf Maß zu bringen, mit zumindest einem Paar Walzenglieder (128),
**dadurch gekennzeichnet, dass** das Gerät umfaßt:
ein Gehäuse mit einem Oberteil (74) und einem Unterteil (76), das einen langgestreckten, flachen Durchgang (80) bildet;
wobei genannter Durchgang (80) eine vorbestimmte Größe und Form entsprechend der Größe und Form des endgültigen Kaugummierzeugnisses aufweist.

2. Gerät nach Anspruch 1, worin der genannte Oberteil (74) einen ersten Plattenteil (120) besitzt, der einen ersten Teil des genannten Durchganges (80) bildet, und der genannte Unterteil (76) einen zweiten Plattenteil (122) besitzt, der einen zweiten Teil des genannten Durchganges (80) bildet.

3. Gerät nach Anspruch 2, ferner ein Mittel umfassend, um genannten ersten (120) und genannten zweiten Plattenteil (122) im wesentlichen parallel zueinander einzustellen.

4. Gerät nach Anspruch 1, ferner ein Vorspannmittel umfassend, um genannten Oberteil (74) und genannten Unterteil (76) relativ zueinander vorzuspannen.

5. Gerät nach Anspruch 1, worin zumindest zwei Paare von Walzengliedern (94 und 128) vorgesehen sind.

6. Gerät nach Anspruch 5, worin einer der genannten Sätze von Walzengliedern (128) vertikal und der andere der genannten Sätze von Walzengliedern (94) horizontal positioniert ist.

7. Gerät nach Anspruch 1, ferner zumindest zwei Paare von Walzengliedern (128) in dem genannten Gehäuse umfassend, um den genannten ununterbrochenen Streifen aus Material in dem genannten Durchgang in der genannten vorbestimmten Größe und Form zu halten.

8. Gerät nach Anspruch 7, worin drei Paare von Walzengliedern (128) in dem genannten Gehäuse vorgesehen sind.

9. Gerät nach Anspruch 2, worin die genannten Platten (120 und 122) in sich eine Öffnung (129) aufweisen, um die Walzen (128) zu positionieren.

10. Gerät nach einem der Ansprüche 2 bis 9, das Metallplatten aufweist, die in axialer Ausrichtung mit dem Streifen angeordnet sind.

11. Gerät nach einem der Ansprüche 2 bis 10, worin die genannten Platten (120 und 122) für leichtes Eintreten und Austreten des Kaugummimaterials abgeschrägt oder abgewinkelt (124 und 126) sind.

12. Gerät nach einem der Ansprüche 1 bis 11, das drei Sätze paralleler Walzen (94, 96 und 98) aufweist, die die Dicke des Streifens des Materials walzen und einstellen.

13. Gerät nach einem der Ansprüche 2 bis 12, das eine Mehrzahl von Sätzen von vertikal angeordneten Walzen/Führung-Gliedern (128) aufweist, die in Öffnungen in den genannten Platten angeordnet sind.

14. Gerät nach Anspruch 13, worin die genannten Walzenglieder (128) an den Seiten des Gummimaterials (45') angeordnet sind und die genaue Breite des endgültigen Kaugummierzeugnisses definieren.

15. Gerät nach einem der Ansprüche 1 bis 14, das einen Nivelliermechanismus (82) umfaßt, um einen gleichen Abstand zwischen genanntem Oberteil (74) und genanntem Unterteil (76) beizubehalten.

16. Gerät nach Anspruch 15, worin genannter Nivelliermechanismus (82) ein Paar Spannrollen (90) und eine Reihe von Gewindebolzen (84) umfaßt, die an den vier Ecken des Gerätes (48) und entlang der zwei Seiten angeordnet sind, wobei eine Endloskette (86) mittels eines Einstellrades (88) wirksam ist, um die Gewindebolzen (84) und das Paar der Spannrollen (90) gleichzeitig zu drehen und einzustellen.

## Revendications

1. Appareil (48) destiné à dimensionner une bande continue de gomme à mâcher comprenant au moins une paire d'éléments formant rouleau (128), **caractérisé en ce que** l'appareil comprend :
un logement présentant un élément supérieur (74) et un élément inférieur (76) formant une voie de passage plate allongée (80) ;
ladite voie de passage (80) ayant une taille et une forme prédéterminées correspondant à la taille et à la forme du produit final de gomme à mâcher.

2. Appareil selon la revendication 1, dans lequel ledit élément supérieur (74) présente un premier élément formant plaque (120) formant une première partie de ladite voie de passage (80) et ledit élément inférieur (76) présente un second élément formant plaque (122) formant une seconde partie de ladite voie de passage (80).

3. Appareil selon la revendication 2, comprenant en outre des moyens destinés à positionner lesdits premier (120) et second (122) éléments formant plaque sensiblement parallèlement l'un par rapport à l'autre.

4. Appareil selon la revendication 1, comprenant en outre des moyens de sollicitation (78) destinés à solliciter lesdits éléments supérieur (74) et inférieur (76) l'un par rapport à l'autre.

5. Appareil selon la revendication 1, dans lequel au moins deux paires d'éléments formant rouleau (94 et 128) sont fournies.

6. Appareil selon la revendication 5, dans lequel un desdits ensembles d'éléments formant rouleau (128) est positionné verticalement et l'autre desdits ensembles d'éléments formant rouleau (94) est positionné horizontalement.

7. Appareil selon la revendication I, comprenant en outre au moins deux paires d'éléments formant rouleau (128) dans ledit logement destiné à conserver ladite bande continue de matière auxdites taille et forme prédéterminées dans ladite voie de passage.

8. Appareil selon la revendication 7, dans lequel trois paires d'éléments formant rouleau (128) sont fournies dans ledit logement.

9. Appareil selon la revendication 2, dans lequel lesdites plaques (120 et 122) présentent une ouverture (129) à l'intérieur destinée à positionner les rouleaux (128).

10. Appareil selon l'une quelconque des revendications 2 à 9, présentant des plaques de métal positionnées en alignement axial avec la bande.

11. Appareil selon l'une quelconque des revendications 2 à 10, dans lequel lesdites plaques (120 et 122) sont chanfreinées ou inclinées (124 et 126) pour une facilité d'entrée et de sortie de la gomme à mâcher.

12. Appareil selon l'une quelconque des revendications 1 à 11, présentant trois ensembles de rouleaux parallèles (94, 96 et 98) roulant et régulant l'épaisseur de la bande de matière.

13. Appareil selon l'une quelconque des revendications 2 à 12, présentant une pluralité d'ensembles d'éléments formant rouleau/guide disposés verticalement (128) positionnés dans l'ouverture dans lesdites plaques.

14. Appareil selon la revendication 13, dans lequel lesdits éléments formant rouleau (128) sont positionnés sur les côtés de la gomme (45') et définissent la largeur précise du produit final de gomme à mâcher.

15. Appareil selon l'une quelconque des revendications 1 à 14, comprenant un mécanisme de mise à niveau (82) destiné à maintenir une distance égale de séparation entre lesdits éléments supérieur (74) et inférieur (76).

16. Appareil selon la revendication 15, dans lequel ledit mécanisme de mise à niveau (82) comprend une paire de roues de serrage (90) et une série de goupilles filetées (84) positionnées dans les quatre coins de l'appareil (48) et le long des deux côtés, une chaîne continue (86) fonctionnant par une roue de réglage (88) destinée à tourner et régler simultanément les goupilles filetées (84) et une paire de roues de serrage (90).
